# EUROPEAN PATENT SPECIFICATION

(11) **EP 3 098 000 B1**
(45) Date of publication and mention of the grant of the patent: **07.08.2019**
(21) Application number: 16170600.7
(22) Date of filing: 20.05.2016
(51) Int. Cl.: B22F 3/105, B29C 67/00, G06F 21/73, B22F 5/00, G06K 1/12, G06K 19/06, B33Y 10/00, B33Y 40/00

(54) **ADDITIVE MANUFACTURING METHOD OF A COMPONENT AND A RELATED IDENTICATION PATTERN, A KIT OF PARTS COMPRISING A COMPONENT HAVING AN OBFUSCATION PATTERN**
GENERATIVES VERFAHREN ZUR HERSTELLUNG EINER KOMPONENTE MIT IDENTIFIKATIONSMUSTER, BAUKASTEN MIT TEILEN MIT EINER KOMPONENTE MIT MUSTER ZUM OBFUSKIEREN
PROCÉDÉ DE FABRICATION PAR MÉTHODE ADDITIVE D'UN COMPOSANT AVEC UN MOTIF D'IDENTIFICATION ASSOCIÉ ET UN KIT DE PIÈCES COMPORTANT UN COMPOSANT AVEC UN MOTIF D'OBFUSCATION

(30) Priority: 27.05.2015 GB 201509033
(43) Date of publication of application: 30.11.2016
(73) Proprietor: Rolls-Royce plc, London SW1E 6AT (GB)
(72) Inventor: Clark, Daniel, Derby, Derbyshire DE24 8BJ (GB); Care, Ian, Derby, Derbyshire DE24 8BJ (GB); Poole, David, Derby, Derbyshire DE24 8BJ (GB)
(74) Representative: Rolls-Royce plc

(56) References cited:
- EP-A1- 2 875 932
- EP-A1- 3 053 741
- WO-A2-2012/051981
- US-A1- 2012 183 701
- US-B1- 6 363 606
- MARK YAMPOLSKIY ET AL: "Intellectual Property Protection in Additive Layer Manufacturing", 20141209; 20141209 - 20141209, 9 December 2014 (2014-12-09), pages 1-9, XP058065654, DOI: 10.1145/2689702.2689709 ISBN: 978-1-60558-637-3

## Description

The present disclosure concerns a method of manufacturing a component using an additive layer method, in order to mark the component.

Additive layer manufacture (ALM), also known as "3D printing" involves forming a 3D solid component from multiple layers of material fused together. Examples include stereolithography (in which a curable material is selectively hardened by a laser) and selective laser sintering (SLS, described in US2004094728, in which a metal powder or wire is selectively heated, in order to sinter (i.e. consolidate) the powder to produce the component) among others.

ALM permits relatively low cost manufacture of components, and is particularly beneficial for components having low production runs, as setup costs are relatively low, since the same machine can be used to produce different components.

However, ALM also increases the risk of counterfeiting, since a genuine part can be scanned using techniques such as structured light scanning, and reproduced using ALM relatively cheaply and accurately. Counterfeiting is a particular problem in the field of aerospace, since the performance of many components is safety critical, and counterfeited parts may have lower performance compared to Original Equipment Manufacturer (OEM) parts, for example due to the use of inferior materials.

Consequently, there is a need for a method of additive layer manufacturing which can be used to mark the part to identify its origin, or other properties of the part. Such methods must not affect the performance of the part, and must be themselves difficult to copy. It is also desirable that the method does not involve additional processing steps for applying the marking, since this would increase manufacturing costs.

Several previous methods are known for applying part markings to additive layer manufactured parts. US2005225004 discloses adding different coloured dyes to the sinterable powder, which are then built into a sub-layer of the part. However, this method requires modifications to the sintering apparatus, and is relatively easy to reproduce.

US2012203365 discloses a method of providing a machine readable 3-D tag on a surface of a sintered part. However, again, such a method is relatively easily scannable and reproduceable, and may affect the surface properties of the component.

US2010035084 discloses a method of implanting magnetic media within a 3d printed component. However, such a media may have different material properties to the remainder of the component, and so would represent an internal weakness. Additional expense will also be incurred in providing the magnetic media.

EP2875932 discloses a method and an apparatus for generating a three-dimensional work piece containing an information code are provided. The method comprises the steps of applying a raw material powder onto a carrier by means of a powder application device, irradiating electromagnetic or particle radiation onto the raw material powder applied onto the carrier by means of an irradiation device, and controlling the operation of the powder application device and the irradiation device so as to generate an information code pattern on or in the work piece, wherein the information code pattern is defined by the microstructure of the work piece.

EP3053741 discloses an apparatus and method for manufacturing and authenticating a three-dimensional article. The method includes the steps of successively building up the article from a metal powder by an additive manufacturing process by scanning a selected portion of the metal powder with electromagnetic radiation forming an anti-counterfeiting mark in the article during the additive manufacturing process, and determining whether the article includes the anti-counterfeiting mark.

US2012183701 discloses method for producing a marked object. To be able to create markings in a particularly flexible way, it is provided that the object is produced by an additive production process, at least one marking being formed in the object during the additive production process. The method makes many degrees of freedom possible in the design of the marking. For example, the method makes it possible in a very simple way for two- or three-dimensional structures to be concealed within the object during the additive production process. In addition or as an alternative, production parameters can be varied, whether stochastically or deterministically, to produce variations in density. For example, a porous microstructure may be produced as a marking. It is also possible for basic material in the object to be left untreated or to be differently treated, so that it forms the marking.

WO12051981 discloses a component, in particular an engine component, comprising an allocation characteristic for allocating the component a defined place of manufacture. Said allocation characteristic is located inside the component which is inaccessible from the outside.

"Intellectual Property Protection in Additive Layer Manufacturing: Requirements for Secure Outsourcing" by Mark Yampolskiy et al, discusses the problem of Intellectual Property protection in the case of outsourcing the ALM process and various currently known solutions.

US6363606 describes a process for making a structure using three dimensional printing techniques. The method includes the following steps: A first type of powder material is deposited in a defined area to form a first layer. Next, a binder material is applied to certain regions of the first type of powder to define a portion of the structure to be formed. And finally, a portion of the unbound powder is removed using a technique such as vacuuming. The foregoing steps are repeated a sufficient number of times to create the desired shape of the structure as defined by the regions held by the binder material.

According to a first aspect of the invention there is provided a method according to claim 1.

It has been found by the inventors that varying at least one of the heating and / or scanning parameters of the scanning step results in visible changes of the surface of the component. These changes can be used to encode an identification pattern in the surface of the component, to thereby prevent copying. While the identification pattern is readily identifiable, the pattern or scanning / heating parameters required to cause the change may be difficult to identify. Since the changes are essentially two-dimensional, conventional 3d scanning techniques cannot be used to copy the pattern. The changes also do not significantly affect the surface or bulk properties of the component, and so can be used on high performance, safety critical items such as aerospace components. The identification pattern can be applied using existing additive layer manufacturing equipment in a single step.

The step of defining the identification pattern may comprise defining information to be conveyed by the part, and translating the information to a machine readable pattern.

The scanning parameters may comprise one or more of scanning pass speed, scanning pass direction, scanning pass pattern, scanning pass overlap, scanning pass dithering, scanning pass angle, heating source distribution and heating source axis. By changing one or more of these scanning parameters, a detectable surface change is provided, for example a different surface orientation, which provides contrast between the first and second regions to form the identification pattern. It has been found that these parameters can be significantly adjusted to provide a contrast, without affecting the structural characteristics of the surface.

The heating parameters may comprise one or more of heating source spot shape, heating source intensity and heating source timing. Again, it has been found that these heating parameters can be adjusted to provide a contrast, without affecting the surface properties of the component.

The heating source may comprise any one of a laser and an electron beam.

Where the contrast between the first and second regions is provided by different scanning pass patterns, the identification pattern may comprise a space filling curve, the first and second regions defining different space filling curves.

The method further comprises defining an obfuscation pattern. The obfuscation pattern comprises a plurality of pseudo-random surface orientations in which the identification pattern is encoded. The obfuscation pattern is defined by the first and second regions. Advantageously, in order to read the identification pattern, the obfuscation pattern must first be identified, which may not be apparent to an observer without additional equipment.

The obfuscation pattern may comprise a plurality of spaced lines defined by differently oriented surface regions formed by the first and second regions. Consequently, the spaced lines may provide a diffraction pattern when scanned with laser light. Consequently, such an arrangement may be more difficult to scan using a laser light source, and so more difficult to copy, since a detector would detect the diffraction pattern generated by the spaced lines, rather than the obfuscation pattern itself.

According to a second aspect of the invention, there is provided a kit of parts comprising a component having an obfuscation pattern comprising an identification pattern produced in accordance with the method of the first aspect of the invention; and
a transparent overlay comprising a plurality of refractive zones configured to diffract light in accordance with the obfuscation pattern to reveal the identification pattern.

Advantageously, the identification of the identification pattern can only conveniently be carried out in combination with the transparent overlay, since the transparent overlay effective "cancels out" the obfuscation pattern in view of the refractive zones. Consequently, without the overlay, copying of the identification is more complex, resulting in further hurdles for a counterfeiter to overcome.

The transparent overlay may comprise a prismatic sheet of transparent material, the prisms being oriented in accordance with the obfuscation pattern. The transparent material may comprise a plastics material.

The transparent overlay may comprise a birefringent material that when oriented in accordance with the obfuscation pattern reveal information or a message. The pattern may be a repeating pattern in order that the overlay does not have to be precisely located.

The skilled person will appreciate that except where mutually exclusive, a feature described in relation to any one of the above aspects of the invention may be applied mutatis mutandis to any other aspect of the invention.

Embodiments of the invention will now be described by way of example only, with reference to the Figures, in which:
**Figure 1** is a flow diagram illustrating a method of forming a component in accordance with the present disclosure;
**Figure 2** is a flow diagram illustrating the first step of the method of figure 1;
**Figure 3** is a perspective view of a component formed in accordance with the present disclosure comprising a first identification pattern;
**Figure 4** is a plan schematic view of 2-D matrices in the form of space filling curves;
**Figure 5** is a plan schematic view of Information encoded utilising the position of nodes, length of lines and orientation of lines;
**Figure 6** is a plan schematic view of a second identification pattern in accordance with the present disclosure within an obfuscation pattern;
**Figure 7** is a plan schematic view of an overlay sheet used to read the embedded information;
**Figure 8** is a plan schematic view of Information encoded utilising raster lines.

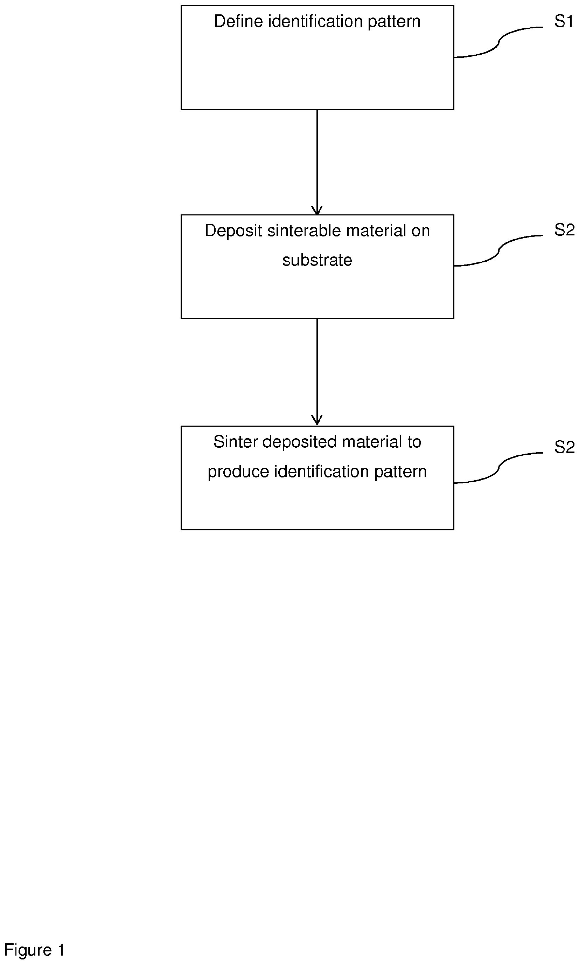

Figure 1 shows a process flow diagram illustrating a method of forming a component in accordance with the present disclosure. The component could for example comprise a metallic component or a plastics component. In one example, the component is a housing for electrical equipment. In a first step S1, an identification pattern is defined.

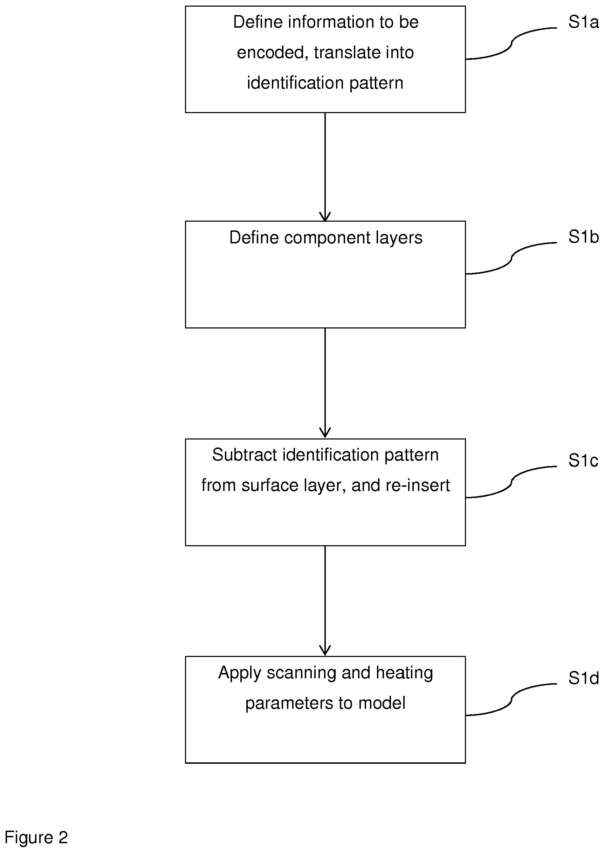

Figure 2 shows the first step S1 in more detail. In a first sub-set step S1a, the identification pattern is defined by first defining part data to be encoded in the identification pattern. This could include information such as the manufacturer, model, part identifying information and batch of the component. Due to the relatively large amount of information that can be encoded, information regarding the machine or machine operator that created the component can also be encoded. This information is used to create an identification pattern, which in a first example, is in the form of a QR code in which the part data is to be encoded.

In a second sub-step S1b, the dimensions of the part to be manufactured are defined. This generally comprises a plurality of layers of material, which define the component as a whole. Typically, this step is carried out on a general purpose computer using suitable Computer Assisted Design (CAD) software, such as "Magics"™, which may operate on a file in the STL format.

In a third sub-step S1c, the identification pattern identified in step S1a is subtracted from a top surface layer of the geometry defined in step S1b. The identification pattern is then re-inserted into the top surface layer, in the location where the identification pattern was subtracted. This creates a continuous surface layer comprised of two regions - the original surface layer (i.e. comprising a first region A), and the identification pattern (comprising a second region B).

In a fourth sub-step S1d, the CAD model of the component generated in the third sub-step S1c is transferred to additive layer process software such as EOS PSW™. In this step, scanning and heating parameters are assigned to the first and second regions A, B. The same scanning and heating parameters are applied to the first region A as the parameters for the preceding layers (if present) on the basis of the parameters required in order to provide desired physical component characteristics. However, different scanning and / or heating parameters are assigned to the second region B of the surface layer, as will be described in further detail below.

The scanning parameters comprise one or more of scanning pass speed, scanning pass direction, scanning pass pattern, scanning pass overlap spacing, scanning pass dithering, scanning pass angle, heating source distribution and heating source axis. By changing one or more of these scanning parameters, a detectable surface change is provided, for example a different surface orientation, which provides contrast between the first and second regions to form the identification pattern. The heating parameters may comprise one or more of heating source spot shape, heating source intensity, heating source timing and heating source duty cycle. Again, it has been found that these heating parameters can be adjusted to provide a contrast, without affecting the surface properties of the component.

The heating / scanning parameters of both the first and second regions must provide acceptable physical characteristics for the component, yet also provide an observable effect on the surface of the sintered component. In one example, the first region is scanned at a velocity of 500 mm/s using a heating power of 160W, while the second region is scanned at a velocity of 1000mm/s at a heating power of 195W. This combination of scanning / heating parameters has been found to result in significantly different surface orientations in the finished article in the first and second regions, while also providing acceptable surface physical characteristics. The heating time and scan speed depend on a number of variables including the material type, powder size, layer thickness, component solidity and previous layer residual heat. The above parameters are thought to be suitable since they have been found to alter one or more of the shape, size, orientation or depth of the weld pool, and so affect the final surface characteristics (in particular surface orientation and roughness) of the article. By defining different areas formed by different parameters, these differences can be used to encode information on the component.

It has been found that varying the lay orientation and spacing of the heat source passes is highly effective in creating an observable contrast between the first and second regions. Changing the heat source axis between the regions has also been found to be effective in experiments. Where the heating source is an electron beam, the electron beam dither can be altered to change the heating of the surface layer, resulting in similar effects.

In the second step S2, the model is then supplied to an Additive Layer Manufacturing machine (ALM), such as a laser or electron beam sintering machine. One suitable example is an electron beam sintering machine produced by Arcam™. The electron beam sintering machine is then used to add layers of sinterable material, and then, in a third step S3, sinter the material using the scanning and heating parameters for the first and second regions defined in the first step S1.

The above described method provides a method of forming and marking a component that does not change the component integrity, or require any additional machining process steps or equipment. The method is easy to read, but difficult to replicate, as a large amount of trial and error may be required to determine what process parameters are required to generate the observed surface characteristics.

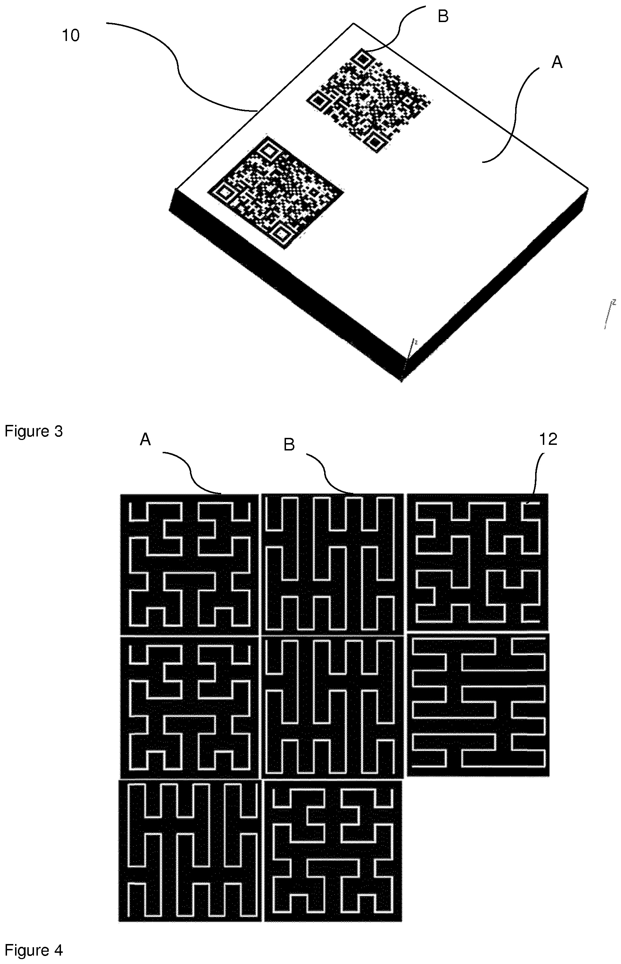

Figure 3 shows an example identification pattern 12 applied to a component 10. In this case, the identification pattern comprises a 2-D data matrix in the form of a QR-Code. In this example, the first region A is represented by the white areas of the surface, while the black areas B represent the second region. A visible contrast is detectable between the two regions A, B. In this example, the surface is formed by the ALM apparatus using different heating / scanning parameters such that the first region A has a different surface facet angle compared to the second region B. Consequently, when light is shone at the component at a particular angle, the contrast between the first and second regions A, B is revealed. By concealing the pattern in a part of the article 10 not easily visible, and by limiting the angle of light required to reveal the pattern, the pattern may not be revealed to a casual observer, making replication of the pattern in a counterfeit part difficult. At the very least, the final surface finish of the article will have to be reproduced to a higher fidelity, increasing production costs to the counterfeiter. This can be enhanced by changing the laser angle when scanning the black areas B. The identification pattern could be read by a human operator, or automatically by a machine vision system / automated visual inspection system.

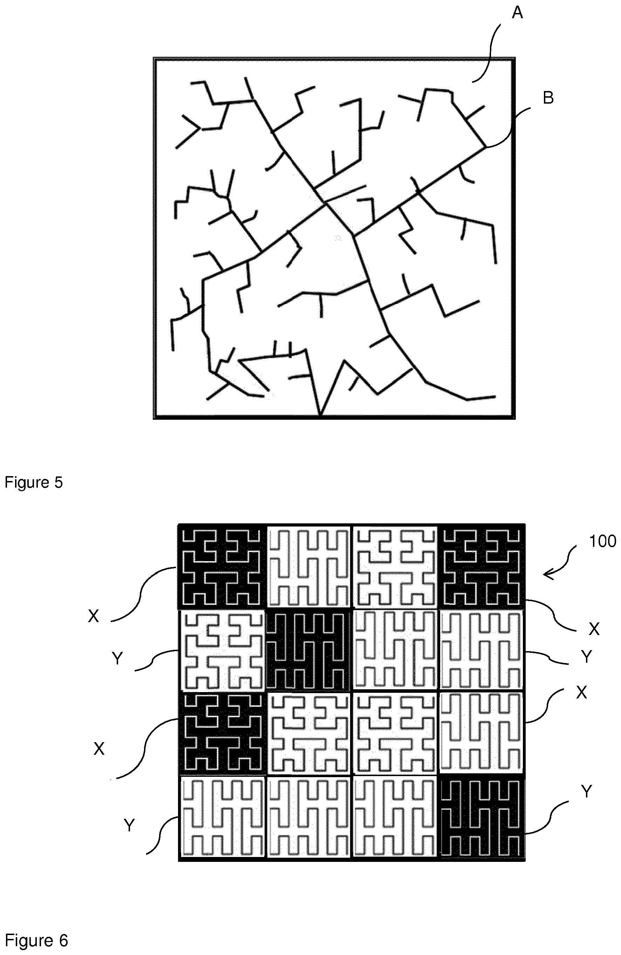

Other 2D data matrices can be utilised, such as a space filling curve. Figures 4 and 6 provide further examples of 2-D matrices in the form of space filling curves.

In the space filling curve of figure 4, data is encoded by a continuous pattern, which fills the entire space of the surface. In this case, the first and second regions A, B are represented by different scanning patterns. The first region A comprises areas of the component which are scanned in accordance with a first scanning pattern, while the second region B comprises areas of the component which are scanned using a second scanning pattern. Information is encoded by providing different space filling patterns in a grid like pattern. For example, the pattern in grid A could represent a "1", while the pattern in grid B could represent a "0".

Similarly, in figure 5, first and second regions A, B are defined by different scanning and heating parameters, with the black lines representing the second region B, and the white area representing the first region A, which may have one or both of different heating parameters and scanning parameters to the first region. Information may be encoded in the position of nodes, length of lines and orientation of lines.

In the present invention, the method comprises encoding the identification pattern within an obfuscation pattern. The obfuscation pattern comprises a plurality of random or pseudo-random surface facet orientations. The surface facet orientations themselves do not contain the necessary data, but rather portions of the surface having a particular orientation contain the identification pattern data. For example, figure 6 shows an example surface layer of a component 100. The black background squares X having white lines comprise surface areas of the component having a first orientation (for example, angled upwardly somewhat), whereas the white background squares Y having black lines comprise surface areas having a second orientation different alternative to the first orientation (for example, regions which are downwardly angled).

The data could be encoded in the first and second areas using any of the techniques discloses above, such as different heating or scanning parameters, utilising techniques such as different space filling patterns for example (as shown in figure 6).

Under normal lighting conditions, the identification pattern as encoded by the space filling pattern would not be visible, but would merely appear as surface roughness. Due to parts of the identification pattern having a different surface orientation to other parts of the identification pattern, no single lighting orientation or viewing angle could be used to reveal the identification pattern. In more complex embodiments, further surface orientations could be used, for example, left and right orientations.

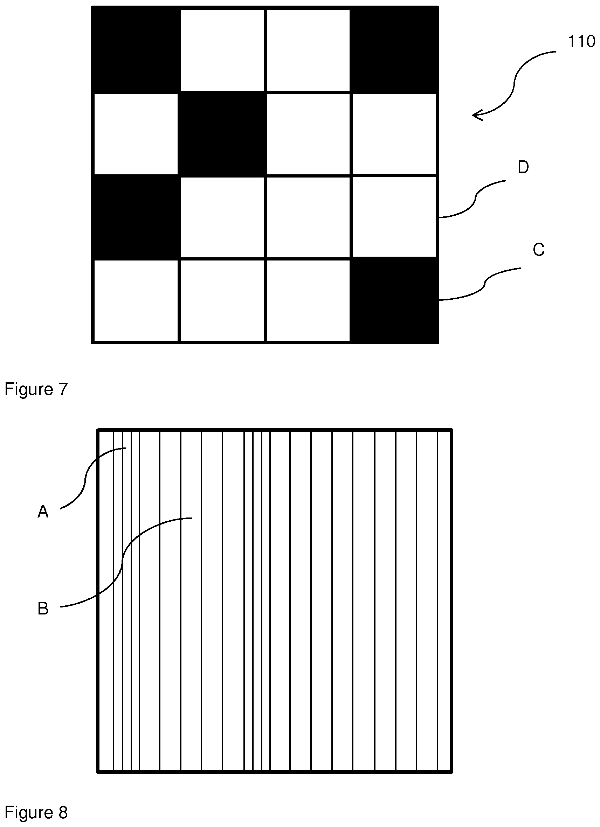

In order to reveal the identification code to an operator, a transparent overlay sheet 110 is provided, as shown in figure 7. In this embodiment, the transparent overlay sheet 110 comprises a transparent plastics sheet comprising a grid of different facet angles C, D, which corresponds to the facet angles of the obfuscation pattern (with black squares C representing the areas having the first orientation X, and white squares D representing areas having the second orientation Y). Consequently, the plastics sheet will (when held in the correct orientation and position) diffract light passing through the sheet to the same plane, thereby revealing the identification pattern to a user. Consequently, the code can only be read in conjunction with the overlay sheet, thereby enhancing security. Each component may comprise a plurality of codes - one for a user, and one for the manufacturer. Each code could then only be read using a corresponding overlay. The pattern shown in figure 7 is simplistic and in practice would be repeated such that the overlay does not have to be precisely located when used to reveal the information.

In a still further embodiment, as shown in figure 8, the pattern could be encoded using first regions A having closely spaced raster / scanning lines, and second regions B having raster lines spaced further apart. Consequently, when shone with light (preferably using a coherent light source such as laser light), an interference pattern is produced by the reflected light due to the different surface orientations produced by the raster lines. This interference pattern could encode the identification data. Again, reproducing the pattern of lines from the interference pattern is relatively difficult, and would at least require higher precision duplication of the surface of the article. Utilising this raster line interference, this can be used to create a false information for a regular (fixed space interval scanner) such that a part produced by this method can impose a message such as "fake" or "invalid" on the part made by copying.

## Claims

1. A method of forming a component, the method comprising:
defining an obfuscation pattern comprising a plurality of random or pseudo-random surface facet orientations;
defining an identification pattern within the obfuscation pattern;
defining one or more scanning parameters and / or one or more heating parameters;
depositing a sinterable material on a substrate;
scanning a heat source of the deposited sinterable material to thereby selectively sinter the material to the substrate to produce a sintered layer having the obfuscation pattern in which the identification pattern is encoded; wherein
the sintered layer comprises at least first and second surface areas (X and Y respectively) having respective first and second orientations defining the obfuscation pattern, one or more surface areas (X, Y) defining first and second regions (A, B), the method comprising sintering the first region (A) using one or more scanning parameters and / or one or more heating parameters having a first value, and sintering the second region (B) using one or more scanning parameters and / or one or more heating parameters having a second value to thereby produce the identification pattern comprising a contrast between the first and second regions, wherein the obfuscation pattern prevents the identification pattern from being revealed due to parts of the identification pattern having a different surface orientation than other parts of the identification pattern such that under normal light conditions, the identification pattern as encoded by the obfuscation pattern is not visible, but merely appears as surface roughness.

2. A method according to claim 1, wherein the step of defining the identification pattern comprises defining information to be conveyed by the part, and translating the information to a machine readable pattern.

3. A method according to claim 1 or claim 2, wherein the scanning parameters comprises one or more of scanning pass speed, scanning pass direction, scanning pass pattern, scanning pass overlap, scanning pass dithering, scanning pass angle, heating source distribution and heating source axis.

4. A method according to any of the preceding claims, wherein the heating parameters comprise one or more of heating source spot shape, heating source intensity and heating source timing.

5. A method according to any of the preceding claims, wherein the heating source may comprise any one of a laser and an electron beam.

6. A method according to claim 3 or any claim dependent thereon, wherein the identification pattern comprises a space filling curve, the first and second regions defining different space filling curves.

7. A method according to any of the preceding claims, wherein the obfuscation pattern comprises a plurality of spaced lines defined by differently oriented surface regions formed by the first and second regions.

8. A kit of parts comprising a component having an obfuscation pattern comprising an identification pattern produced in accordance with any of the preceding claims; and
a transparent overlay comprising a plurality of refractive zones configured to diffract light in accordance with the obfuscation pattern to reveal the identification pattern.

9. A kit of parts according to claim 8, wherein the transparent overlay comprises a prismatic sheet of transparent material, the prisms being oriented in accordance with the obfuscation pattern.

10. A kit of parts according to claim 9, wherein the transparent material comprises a plastics material.

11. A kit of parts according to any of claims 8 to 10, wherein the transparent overlay comprises a birefringent material that when oriented in accordance with the obfuscation pattern reveal information or a message.

## Patentansprüche

1. Verfahren zum Formen einer Komponente, wobei das Verfahren umfasst:
Definieren einer Verdunklungsstruktur, umfassend eine Vielzahl zufälliger oder pseudozufälliger Oberflächenfacettenausrichtungen;
Definieren einer Identifikationsstruktur innerhalb der Verdunklungsstruktur;
Definieren eines oder mehrerer Scanparameter und/oder eines oder mehrerer Heizparameter;
Abscheiden eines sinterbaren Materials auf einem Substrat;
Scannen einer Wärmequelle des abgeschiedenen sinterbaren Materials, um dadurch das Material selektiv an das Substrat zu sintern, um eine gesinterte Schicht mit der Verdunklungsstruktur, in der die Identifikationsstruktur codiert ist, zu erzeugen;
wobei die gesinterte Schicht mindestens erste und zweite Oberflächenbereiche (X bzw. Y) mit jeweiligen ersten und zweiten Ausrichtungen umfasst, die die Verdunklungsstruktur definieren, wobei ein oder mehrere Oberflächenbereiche (X, Y) erste und zweite Regionen (A, B) definieren, wobei das Verfahren das Sintern der ersten Region (A) mithilfe eines oder mehrerer Scanparameter und/oder eines oder mehrerer Heizparameter mit einem ersten Wert und das Sintern der zweiten Region (B) mithilfe eines oder mehrerer Scanparameter und/oder eines oder mehrerer Heizparameter mit einem zweiten Wert umfasst, um dadurch die Identifikationsstruktur zu erzeugen, die einen Kontrast zwischen den ersten und zweiten Regionen umfasst, wobei die Verdunklungsstruktur verhindert, dass die Identifikationsstruktur offengelegt wird, da Teile der Identifikationsstruktur eine andere Oberflächenausrichtung als andere Teile der Identifikationsstruktur aufweisen, sodass die Identifikationsstruktur bei normalen Lichtverhältnissen wie von der Verdunklungsstruktur codiert nicht sichtbar ist, sondern nur als Oberflächenrauheit erscheint.

2. Verfahren nach Anspruch 1, wobei der Schritt des Definierens der Identifikationsstruktur das Definieren von durch den Teil zu übertragenden Informationen und das Übersetzen der Informationen in eine maschinenlesbare Struktur umfasst.

3. Verfahren nach Anspruch 1 oder Anspruch 2, wobei die Scanparameter eines oder mehrere von Scandurchgangsgeschwindigkeit, Scandurchgangsrichtung, Scandurchgangsstruktur, Scandurchgangsüberlappung, Scandurchgangs-Dithering, Scandurchgangswinkel, Wärmequellenverteilung und Wärmequellenachse umfassen.

4. Verfahren nach einem der vorstehenden Ansprüche, wobei die Heizparameter eines oder mehrere von Heizquellenspotform, Heizquellenintensität und Heizquellenzeitgebung umfassen.

5. Verfahren nach einem der vorstehenden Ansprüche, wobei die Heizquelle eines eines Laserstrahls und eines Elektronenstrahls umfassen kann.

6. Verfahren nach Anspruch 3 oder einem davon abhängigen Anspruch, wobei die Identifikationsstruktur eine Raumfüllungskurve umfasst, wobei die ersten und zweiten Regionen unterschiedliche Raumfüllungskurven definieren.

7. Verfahren nach einem der vorstehenden Ansprüche, wobei die Verdunklungsstruktur eine Vielzahl beabstandeter Linien umfasst, die durch unterschiedlich ausgerichtete Oberflächenregionen definiert sind, die durch die ersten und zweiten Regionen geformt sind.

8. Set aus Teilen, umfassend eine Komponente mit einer Verdunklungsstruktur, umfassend eine Identifikationsstruktur, die gemäß einem der vorstehenden Ansprüche erzeugt wird;
und eine transparente Auflage, umfassend eine Vielzahl refraktiver Zonen, die konfiguriert sind, um Licht gemäß der Verdunklungsstruktur zu brechen, um die Identifikationsstruktur offenzulegen.

9. Set aus Teilen nach Anspruch 8, wobei die transparente Auflage einen prismatischen Bogen aus transparentem Material umfasst, wobei die Prismen gemäß der Verdunklungsstruktur ausgerichtet sind.

10. Set aus Teilen nach Anspruch 9, wobei das transparente Material ein Kunststoffmaterial umfasst.

11. Set aus Teilen nach einem der Ansprüche 8 bis 10, wobei die transparente Auflage ein doppeltbrechendes Material umfasst, das, wenn es gemäß der Verdunklungsstruktur ausgerichtet ist, Informationen oder eine Mitteilung offenlegt.

## Revendications

1. Méthode de formation d'un composant, la méthode comprenant :
la définition d'une configuration d'obscurcissement comprenant une pluralité d'orientations de facette à surface aléatoires ou pseudo-aléatoires ;
la définition d'un motif d'identification au sein de la configuration d'obscurcissement ;
la définition d'un ou plusieurs paramètres de balayage et/ou d'un ou plusieurs paramètres de chauffage ;
le dépôt d'une matière frittable sur un substrat ;
le balayage d'une source de chaleur de la matière frittable déposée pour procéder alors au frittage sélectif de la matière sur le substrat afin de produire une couche frittée présentant la configuration d'obscurcissement dans laquelle est codée la configuration d'identification ;
la couche frittée comprenant au moins des première et deuxième superficies (X et Y respectivement) présentant des première et deuxième orientations respectives définissant la configuration d'obscurcissement, une ou plusieurs superficies (X et Y) définissant des première et deuxième régions (A, B), la méthode comprenant le frittage de la première région (A) en utilisant un ou plusieurs paramètres de balayage et/ou un ou plusieurs paramètres de chauffage d'une première valeur, et le frittage de la deuxième région (B) en utilisant un ou plusieurs paramètres de balayage et/ou un ou plusieurs paramètres de chauffage d'une deuxième valeur, pour produire ainsi la configuration d'identification comprenant un contraste entre les première et deuxième régions, la configuration d'obscurcissement empêchant à la configuration d'identification d'être révélée du fait que certaines parties de la configuration d'identification présentent une orientation de la surface différente d'autres parties de la configuration d'identification, de sorte qu'en présence de conditions d'éclairage normales, la configuration d'identification, telle qu'elle est codée par la configuration d'obscurcissement, ne soit pas visible, et présente simplement l'aspect d'une rugosité de surface.

2. Méthode selon la revendication 1, l'étape de définition de la configuration d'identification comprenant la définition d'informations à transmettre par la partie, et la conversion des informations en une configuration lisible par machine.

3. Méthode selon la revendication 1 ou la revendication 2, les paramètres de balayage comprenant un ou plusieurs des suivants : vitesse du passage de balayage, direction de la direction de balayage, configuration du passage de balayage, chevauchement du passage de balayage, juxtaposition du passage de balayage, angle du passage de balayage, distribution de la source de chauffage, et axe de la source de chauffage.

4. Méthode selon une quelconque des revendications précédentes, les paramètres de chauffage comprenant une ou plusieurs des suivantes : forme du point source de chauffage, intensité de la source de chauffage, et temporisation de la source de chauffage

5. Méthode selon une quelconque des revendications précédentes, la source de chauffage pouvant comprendre un des suivants : faisceau laser et faisceau électronique.

6. Méthode selon la revendication 3, ou toute revendication tributaire de celle-ci, la configuration d'identification comprenant une courbe de remplissage d'espace, les première et deuxième régions définissant différentes courbes de remplissage d'espace.

7. Méthode selon une quelconque des revendications précédentes, la configuration d'obscurcissement comprenant une pluralité de lignes espacées, définies par des régions à surface à orientation différente formées par les première et deuxième régions.

8. Kit de pièces comprenant un composant présentant une configuration d'obscurcissement comprenant une configuration d'identification produite conformément à une quelconque des revendications précédentes ; et
un revêtement transparent comprenant une pluralité de zones réfractives configurées pour diffracter la lumière conformément à la configuration d'obscurcissement, pour révéler la configuration d'identification.

9. Kit de pièces selon la revendication 8, le revêtement transparent comprenant une feuille prismatique de matière transparente, les prismes étant orientés conformément à la configuration d'obscurcissement.

10. Kit de pièces selon la revendication 9, la matière transparente comprenant une matière plastique.

11. Kit de pièces selon une quelconque des revendications 8 à 10, le revêtement transparent comprenant une matière biréfringente, qui, lorsqu'elle est orientée conformément à la configuration d'obscurcissement, révèle des informations ou un message.
